# FASCICULE DE BREVET EUROPEEN

(11) **EP 1 815 197 B1**
(45) Date de publication et mention de la délivrance du brevet: **09.11.2011**
(21) Numéro de dépôt: 05804444.7
(22) Date de dépôt: 22.09.2005
(51) Int. Cl.: F26B 1/00, F26B 7/00, F26B 17/20

(54) **PROCÉDÉ DE PRÉPARATION D'UN PRODUIT EN POUDRE**
VERFAHREN ZUR HERSTELLUNG EINES PULVERFÖRMIGEN PRODUKTS
METHOD OF PREPARING A POWDERED PRODUCT

(30) Priorité: 22.09.2004 FR 0410025; 15.09.2005 FR 0509450
(43) Date de publication de la demande: 08.08.2007
(73) Titulaire: CLEXTRAL, F-42700 Firminy (FR)
(72) Inventeur: DURAND, Daniel, F-42500 LE CHAMBON FEUGEROLLES (FR); BOUVIER, Jean Marie, F-42000 SAINT ETIENNE (FR); MALLER, Gilles, F-42680 SAINT-MARCELLIN-EN-FOREZ (FR); SCOTT, Maxwell, Berwick, VICTORIA 3806 (AU); STEVENSON, Stewart Robert, MATAKOHE, RD1 (NZ); ROBERTS, Steven James, RAUMATI SOUTH (NZ)
(74) Mandataire: Blot, Philippe Robert Emile
(86) Numéro de dépôt international: PCT/FR2005/002361
(87) Numéro de publication internationale: WO 2006/032797

(56) Documents cités:
- EP-A- 0 169 106
- WO-A-01/52666
- WO-A-97/34503
- CH-A- 86 838
- GB-A- 190 309 002
- US-A- 1 851 988
- US-A- 2 126 807
- US-A- 2 979 408
- US-A- 3 874 090
- US-A- 4 305 969
- US-A- 4 318 773
- US-A- 4 546 226
- US-A- 5 596 815
- US-A- 6 048 565

## Description

### Procédé de préparation d'un produit en poudre.

La présente invention concerne un procédé de préparation en continu d'un produit en poudre à partir du produit à l'état liquide se présentant sous la forme d'un mélange du type solution, suspension ou émulsion en milieux aqueux (voir US 6048565 A).

L'invention concerne en particulier un procédé de préparation en continu de lait en poudre à partir de lait liquide et un lait en poudre obtenu par un tel procédé.

De manière classique, le lait en poudre est obtenu industriellement en effectuant diverses opérations qui permettent à partir de lait liquide ayant généralement une concentration en matière sèche d'environ 12%, d'obtenir un lait en poudre ayant une concentration en matière sèche de l'ordre de 96 à 98% sans dégrader les propriétés nutritionnelles et fonctionnelles du lait. Compte tenu de la thermo-sensibilité du lait, l'opération exige des conditions de séchage particulières qui sont notamment l'application d'une température faible dans les opérations d'évaporation et concentration du lait liquide et le recours à des temps de séjours courts lors du passage de l'état liquide à l'état solide.

De plus, le lait en poudre qui en résulte doit satisfaire à des propriétés fonctionnelles et d'usage strictes telles que densité, porosité, mouillabilité, réhydrabilité complète et instantanée.

Jusqu'à présent, le séchage du lait comporte plusieurs opérations successives, à savoir :
- une opération d'évaporation sous vide du lait à l'état liquide ayant une concentration initiale en matière sèche d'environ 12% pour obtenir une concentration comprise entre 50 et 60% de matière sèche ;
- une opération de séchage par atomisation du lait issu de l'opération précédente et dans laquelle le lait est pulvérisé en très fines gouttelettes qui sont mises en contact direct avec de l'air chaud. Cette opération permet d'obtenir du lait en poudre dont la teneur en matière sèche est de l'ordre de 92% ;
- une opération de séchage terminal en lit fluidisé pour atteindre la teneur finale en matière sèche d'environ 96 à 98% ; et
- un broyage et un tamisage pour calibrer la poudre de lait avant son conditionnement.

Cette technique de fabrication de lait en poudre utilisée jusqu'à présent comporte des inconvénients.

En effet, le séchage par atomisation a un coût élevé notamment en investissement et en consommation énergétique. La consommation énergétique est de l'ordre de 2,6 à 2,8 kg de vapeur et 0,8 kW par kg d'eau évaporée si bien que cette opération est de loin la plus grande consommatrice d'énergie pour l'ensemble du procédé, avec environ 70% de l'énergie thermique et environ 40% de l'énergie électrique.

De plus, même si le séchage par atomisation peut être appliqué à différentes compositions de lait, y compris les produits succédanés du lait en poudre, cette technique n'autorise pas le traitement de lait liquide enrichi en ingrédients vaporisables tels que des arômes par exemple qui seraient éliminés lors du séchage si bien que le développement et la production de produits nouveaux comme par exemple du lait vitaminé ou du lait aromatisé n'est pas envisageable par le séchage par atomisation.

Par ailleurs, on connaît dans le document US-A-5 596 815 constituant l'état de la technique le plus proche, un procédé de séchage d'un matériau brut ayant un certain taux d'humidité et dans lequel le matériau brut est transféré dans un mélangeur avec une proportion déterminée d'un matériau relativement sec. Le matériau est ensuite transféré dans un granulateur, puis dans un sécheur. Une partie du matériau ainsi obtenu est transféré dans un refroidisseur et dans un broyeur et le matériau ainsi broyé est recyclé dans le mélangeur.

Mais, le principal inconvénient de ce procédé réside dans le fait que le produit qui en résulte ne satisfait pas les propriétés fonctionnelles et d'usage exigées et n'arrive pas aux qualités des produits obtenus par les procédés traditionnels car il présente une densité importante et une porosité et une solubilité trop faibles.

L'invention a donc pour but de proposer un procédé de production en continu d'un produit en poudre à partir d'un produit à l'état liquide qui permet d'éviter les inconvénients précédemment mentionnés.

L'invention a donc pour objet un procédé de production en continu d'un produit en poudre, à partir du produit à l'état liquide se présentant sous la forme d'un mélange du type solution, suspension ou émulsion en milieu aqueux, dans lequel au cours d'une première étape on transforme le produit de l'état liquide en produit à l'état visqueux, **caractérisé en ce que** on effectue au moins une étape de foisonnement et au moins une étape de séchage comprenant au moins une première étape de traitement thermomécanique au moyen d'au moins une machine de traitement thermomécanique dans laquelle on injecte simultanément le produit à l'état visqueux et une proportion déterminée de produit en poudre de la même famille que le produit à l'état liquide, la machine de traitement étant configurée pour mélanger le produit à l'état visqueux et le produit en poudre pour obtenir des particules de produit solidifié au contact de l'air ambiant.

Selon des modes de mise en oeuvre particuliers, le procédé comprend une ou plusieurs des caractéristiques suivantes, prise(s) isolément ou selon toutes les combinaisons techniquement possibles :
- outre la première étape de traitement thermomécanique, l'étape de séchage comprend une deuxième étape de séchage des particules obtenues à l'issue de cette étape de traitement thermomécanique,
- entre l'étape de traitement thermomécanique et la deuxième étape de séchage, on effectue une étape de mise en forme du produit solide pour obtenir le produit en poudre,
- on réalise ladite étape de foisonnement du produit à l'état visqueux avant l'étape de traitement thermomécanique,
- on réalise ladite étape de foisonnement entre l'étape de traitement thermomécanique et l'étape de mise en forme du produit solide,
- on réalise une étape de foisonnement du produit à l'état visqueux avant l'étape de traitement thermomécanique et une étape de foisonnement entre ladite étape de traitement thermomécanique et l'étape de mise en forme du produit solide,
- on injecte un gaz au cours de ladite étape de foisonnement ou au cours de l'étape de traitement thermomécanique ou au cours de l'étape de foisonnement et au cours de l'étape de traitement thermomécanique,
- le produit en poudre injecté dans ladite machine de traitement thermomécanique est en totalité du produit recyclé après la deuxième étape de séchage,
- le produit en poudre injecté dans ladite machine de traitement thermomécanique est en partie du produit en poudre recyclé après la deuxième étape de séchage,
- au cours de l'étape de traitement thermomécanique, on réalise un dégazage sous pression atmosphérique ou sous vide,
- à l'issue de la transformation du produit de l'état liquide à l'état visqueux, le produit à l'état visqueux présente une concentration en matière sèche comprise entre 50 et 75%, de préférence entre 65 et 75%,
- à l'issue de l'étape de séchage du produit à l'état visqueux, le produit sous forme solide présente une concentration en matière sèche d'environ 96 à 98%,
- les particules présentent à l'issue de l'étape de traitement thermomécanique une concentration en matière sèche variant entre 70 et 85% et de préférence comprise entre 80 et 85%,
- le rapport entre le débit massique de produit en poudre injecté dans la machine de traitement thermomécanique et le débit massique de produit à l'état visqueux introduit dans la machine de traitement thermomécanique est compris entre 0,10 et 2,50 et de préférence entre 0,20 et 1,00,
- on réalise l'étape de traitement thermomécanique du produit à l'état visqueux en introduisant le produit à l'état visqueux et le produit en poudre dans une machine d'extrusion à deux vis co-rotatives,
- on réalise l'étape de traitement thermomécanique en introduisant le produit à l'état visqueux et le produit en poudre dans un malaxeur, ou un pétrisseur, ou un mélangeur et/ou une machine d'extrusion à une vis,
- le produit à l'état liquide présente initialement une concentration en matière sèche comprise entre 7 et 20%,
- le produit à l'état liquide est du lait liquide, ce par quoi on obtient du lait en poudre,
- le produit à l'état liquide est un produit amylacé, natif ou modifié (physiquement ou chimiquement) à base de farine de céréales (blé, avoine, maïs, orge, etc...), de farine de pommes de terre, de granules de pommes de terre, de flocons de pommes de terre, et/ou de farine de tapioca, le produit étant initialement sous la forme d'un mélange du type solution, suspension ou émulsion en milieu aqueux, ce par quoi on obtient à l'issue du procédé le produit sous forme pulvérulente,
- le produit à l'état liquide est un produit protéinique, natif ou modifié (physiquement et/ou chimiquement) choisi parmi la caséine du lait, le gluten du blé, la zéine du maïs, les protéines de soja, les protéines de légumineuses, en particulier de pois, et/ou les protéines d'oléoprotéaginaux, en particulier de tournesol ou de colza, le produit étant initialement sous la forme d'un mélange du type solution, suspension ou émulsion en milieu aqueux ce par quoi on obtient à l'issue du procédé le produit sous forme pulvérulente,
- le produit à l'état liquide est un coproduit/sous-produit de fractionnement du lait, obtenu par fractionnement du lait, par centrifugation, filtration, nanofiltration, ultrafiltration et/ou osmose inverse, et
- le produit en poudre injecté dans la machine de traitement thermomécanique est à environ 90 - 96% de matière sèche pour les produits d'origine amylacée et protéinique et à environ 90% pour les produits d'origine lactée.

L'invention concerne également du lait en poudre obtenu par un procédé tel que défini ci-dessus.

D'autres caractéristiques et avantages de l'invention apparaîtront au cours de la description qui va suivre, faite en référence aux dessins annexés, sur lesquels :
- la Fig. 1 est un organigramme montrant les étapes d'un premier mode de réalisation d'un procédé de production de lait en poudre conforme à l'invention,
- la Fig. 2 est un organigramme montrant les différentes étapes d'un deuxième mode de réalisation d'un procédé de production de lait en poudre conforme à l'invention, et
- la Fig. 3 est un organigramme montrant les différentes étapes d'un troisième mode de réalisation d'un procédé de production de lait en poudre conforme à l'invention,
- la Fig. 4 est une vue montrant la structure interne d'un produit en poudre obtenu par un procédé selon l'état de la technique le plus proche, et
- les Figs. 5A et 5B sont deux vues montrant la structure interne d'un produit en poudre obtenu par le procédé selon l'invention, respectivement au même grossissement que la Fig. 4 et à un grossissement plus important.

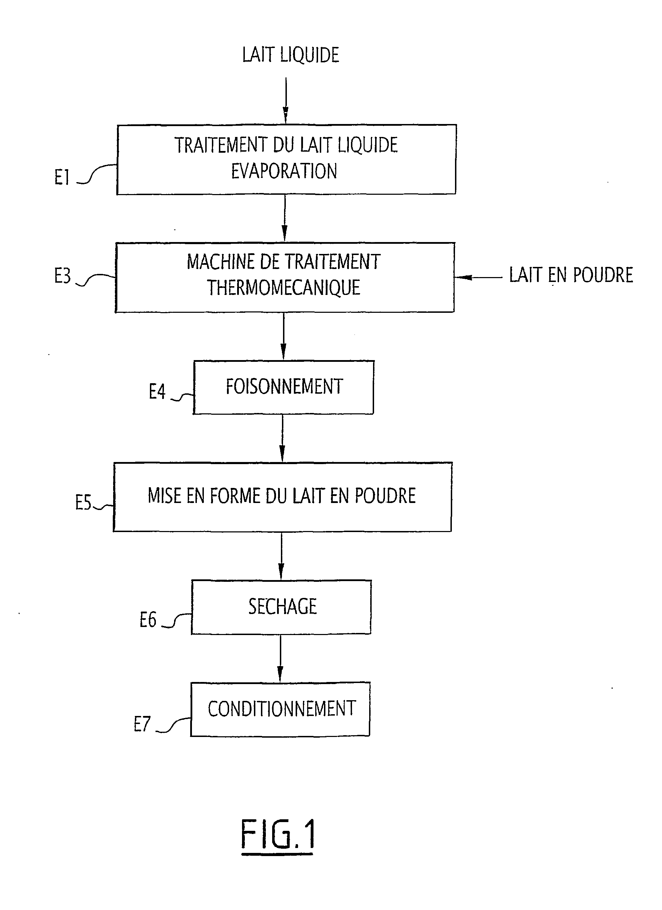

Ainsi que montré sur les organigrammes des Figs. 1 à 3, du lait liquide ayant généralement une concentration en matière sèche comprise entre 7 et 20%, est tout d'abord traité au cours d'une première étape E1 d'évaporation pour obtenir un lait à l'état visqueux ayant une concentration en matière sèche comprise entre 50 et 75% et de préférence entre 65 et 75%. De manière classique, au cours de cette étape E1, le lait liquide est par exemple porté à ébullition à une température élevée, inférieure à 100°C, et à une pression inférieure à la pression atmosphérique. Cette évaporation sous vide permet de ne pas dégrader le lait.

A la suite de cette première étape de traitement, le lait à l'état visqueux subit au moins une étape de séchage, et de préférence, dans le procédé selon l'invention, deux étapes de séchages E3 et E6, et entre ces deux étapes de séchage, une étape E5 de mise en forme du lait solide pour obtenir après la seconde étape de séchage E6, le lait en poudre ayant une concentration en matière sèche d'environ 96 à 98%.

L'étape de séchage comprend une première étape E3 de plastification-concentration du lait réalisée dans une machine de traitement thermomécanique, comme par exemple une machine d'extrusion à deux vis co-rotatives et co-pénétrantes, de type connu.

La machine de traitement thermomécanique comprend une zone d'introduction simultanément, d'une part, du lait à l'état visqueux provenant de l'étape E1 d'évaporation et, d'autre part, d'une proportion déterminée de lait en poudre à environ 96 à 98% de matière sèche.

Le lait en poudre injecté dans la machine de traitement thermomécanique de l'étape E3 est en totalité ou en partie du lait en poudre recyclé après la seconde étape de séchage E6.

Le taux de lait en poudre injecté, c'est à dire le rapport entre le débit massique de lait en poudre recyclé à environ 96 à 98% de matière sèche et le débit massique de lait à l'état visqueux est compris entre 0,10 et 2,50 et de préférence compris entre 0,20 et 1,00.

A la sortie de la machine de traitement thermomécanique de l'étape E3, les particules obtenues ayant une concentration en matière sèche de l'ordre de 60 à 85%, subissent au cours de l'étape E5 une mise en forme du lait en poudre dans laquelle les particules sont broyées et tamisées afin d'obtenir un lait en poudre.

A la suite de cette étape E5, les particules subissent au cours de l'étape E6, un séchage terminal de façon à obtenir un produit ayant une concentration en matière sèche de l'ordre de 96 à 98%.

L'utilisation d'une machine d'extrusion comme machine de traitement thermomécanique, permet de réaliser sur la pâte de lait un travail thermomécanique de plastification-mélange permettant notamment le mélange, le malaxage, le cisaillement et l'échauffement de la pâte de lait pour parvenir au final à une pâte de lait homogène.

La machine d'extrusion présente l'avantage de permettre un traitement en continu.

En variante, d'autres machines permettant un traitement thermomécanique de la pâte de lait sont utilisées lors de la première étape de séchage E3.

De telles machines sont par exemple un mélangeur, un malaxeur, ou un pétrisseur et, à titre d'exemple, on peut citer les mélangeurs à pâles comprenant des pâles entraînées en rotation autour d'un même axe, les mélangeurs à vis dans lesquels plusieurs vis sont entraînées en rotation dans une cuve, les mélangeurs à fluides visqueux tels que les mélangeurs à surface raclée, et les malaxeurs.

Dans une autre variante, on utilise pour réaliser l'étape de traitement thermomécanique, une machine d'extrusion comprenant une unique vis.

De préférence, on réalise dans la machine de traitement thermomécanique de l'étape E3, une étape de dégazage. Le dégazage est une évacuation quasi-instantanée d'eau contenue dans le produit, cette évaporation étant provoquée par une chute brutale de pression, et permettant un changement d'état de la phase liquide à la phase vapeur de l'eau. La baisse rapide de la pression du produit ou du lait est obtenue, selon la pression initiale du produit ou du lait, par mise rapide à l'atmosphère, si le produit ou le lait est à une pression supérieure à la pression atmosphérique, ou par une dépression, ou une basse pression.

Lors du dégazage, la partie de la pâte de lait restant sous forme liquide dans la machine de traitement thermomécanique voit sa température baissée.

Le procédé selon l'invention comporte au moins une étape de foisonnement du produit.

Selon un premier mode de réalisation représenté à la Fig. 1, l'étape de foisonnement E4 est réalisée entre la machine de traitement thermomécanique de l'étape E3 et l'étape E5 de mise en forme du lait en poudre.

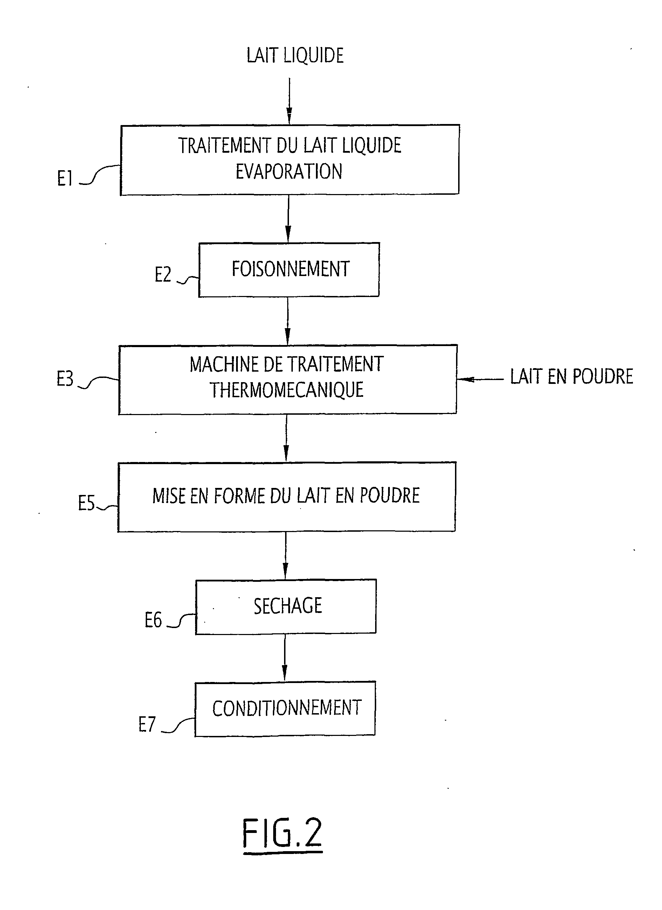

Selon un second mode de réalisation représenté à la Fig. 2, l'étape de foisonnement E2 est réalisée sur le produit visqueux entre l'étape E1 d'évaporation et la machine de traitement thermomécanique de l'étape E3.

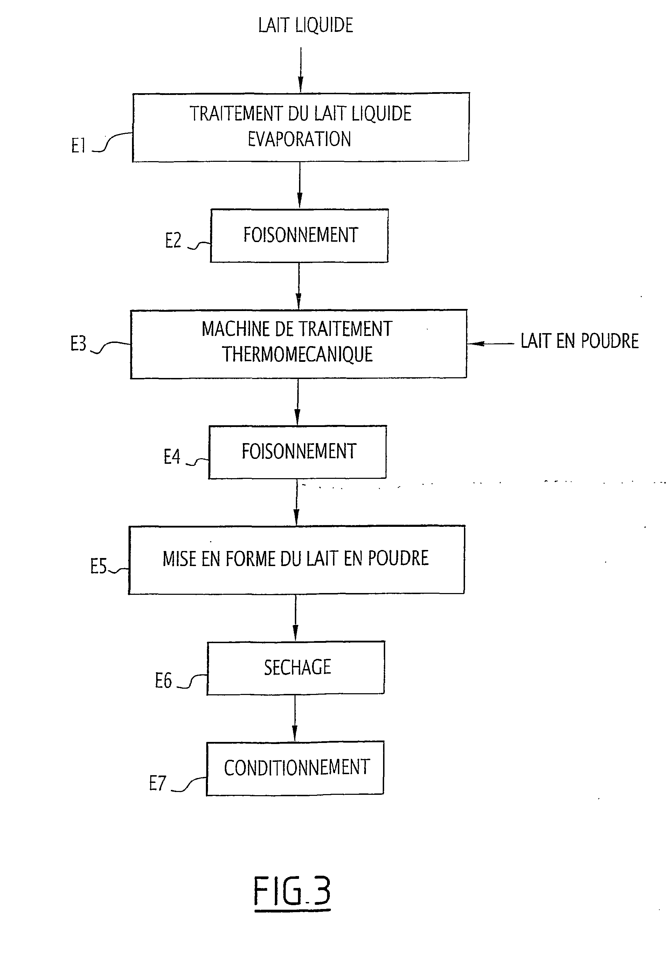

Selon un troisième mode de réalisation représenté à la Fig. 3, une première étape de foisonnement E2 est réalisée sur le produit visqueux entre l'étape E1 d'évaporation et la machine de traitement thermomécanique de l'étape E3 et une seconde étape de foisonnement E4 est réalisée entre la machine de traitement thermomécanique de cette étape E3 et l'étape E5 de mise en forme du lait en poudre.

Cette ou ces étapes de foisonnement consistent en un mélange intime et homogène entre le produit liquide ou visqueux et un gaz pour obtenir une structure aérée et homogène.

De préférence, on injecte au moins au cours d'une étape de foisonnement E2 ou E4, un gaz comme par exemple un gaz inerte. Cette injection de gaz peut être effectuée uniquement au cours d'une étape de foisonnement, ou simultanément au cours d'une étape de foisonnement et dans la machine de traitement thermomécanique. L'injection du gaz pendant une étape où la pâte de lait est brassée permet d'obtenir au final une pâte de lait présentant une structure aérée. Cette étape de foisonnement est nécessaire pour obtenir les propriétés fonctionnelles et d'usage du lait en poudre telles que densité, porosité, mouillabilité, réhydratabilité complète et instantanée. En outre, la structure aérée du lait facilite le séchage ultérieur de la pâte de lait en augmentant sensiblement la surface d'échange de la pâte de lait avec le milieu ambiant, et en facilitant ainsi le transfert de vapeur d'eau.

La poudre de lait obtenue par des procédés classiques et utilisés jusqu'à présent, a une solubilité de 99%, une porosité comprise entre 60 et 65% et une densité de particules de 0,44.

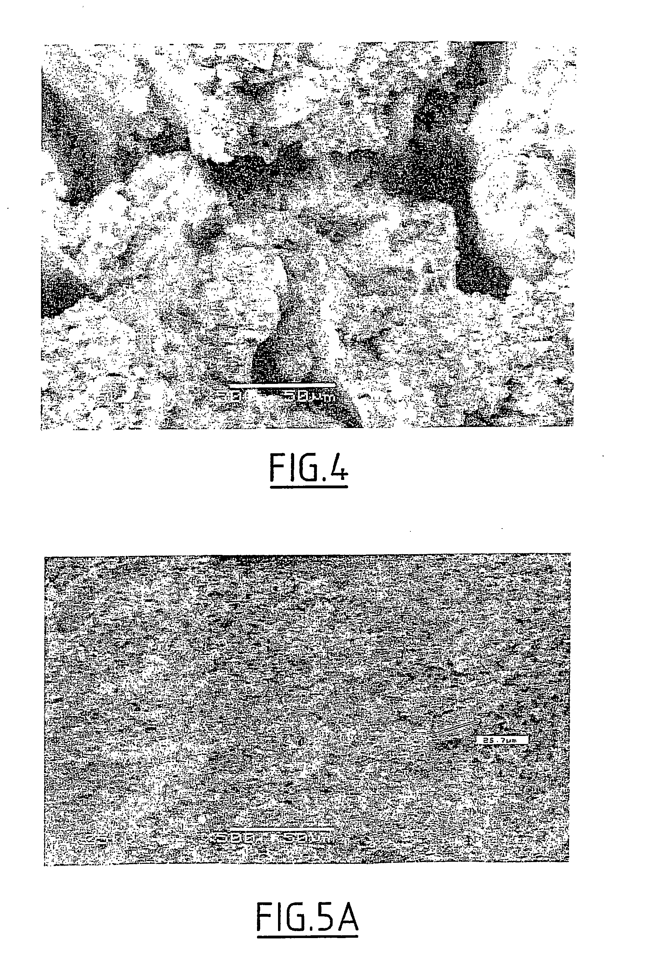

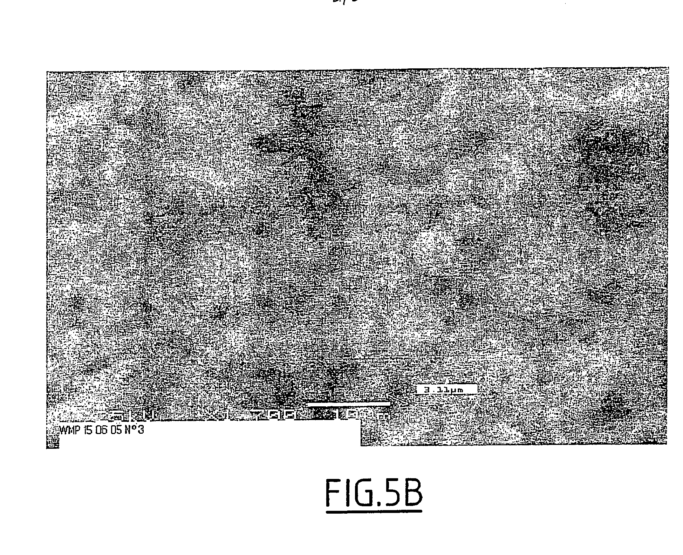

La Demanderesse a procédé à des mesures à l'aide d'un microscope à balayage électronique afin de déterminer les caractéristiques de la structure interne d'une poudre de lait obtenue par un procédé selon l'état de la technique le plus proche, US-A-5 596 815 (Fig. 4) et d'une poudre de lait obtenue par le procédé selon l'invention (Figs. 5A et 5B).

Le grossissement des Figs. 4 et 5A est de 50 microns alors qu'il est de 10 microns pour la Fig. 5B.

Ainsi que montré sur ces figures, les produits obtenus présentent des structures internes différentes, la structure interne du produit de l'état de la technique (Fig. 4) est grossière et a une faible porosité, alors que la structure interne du produit selon l'invention (Figs. 5A et 5B) est homogène et présente des petites bulles emprisonnées dans la matière.

Le produit selon l'état de la technique présente les caractéristiques suivantes :
- solubilité : 90 à 99%
- porosité : 20 à 25%
- densité des particules : 1,3

Le produit selon l'invention présente les caractéristiques suivantes:
- solubilité : 98 à 99%
- porosité : 50 à 70%
- densité des particules : 0,3 à 0,5.

Selon une variante, il est également possible, pour améliorer les propriétés du produit final, d'opérer une étape d'enrobage consistant à revêtir le lait en poudre d'un revêtement. Cette étape d'enrobage est par exemple mise en oeuvre entre la seconde étape de séchage E6 et l'étape de conditionnement E7. L'étape d'enrobage est effectuée par exemple par pulvérisation d'un produit de revêtement sur le lait en poudre.

Un produit de revêtement possible est de la lécithine.

Le procédé selon l'invention est applicable à différentes compositions de lait liquide ayant des teneurs en matière grasse variables et à des produits succédanés du lait en poudre. De plus, il permet le traitement de lait liquide complémenté avec divers ingrédients tels que arômes, vitamines, minéraux, grâce à l'excellente capacité de mélange de la machine de traitement thermomécanique (extrudeuse, malaxeur, mélangeur...), ce qui autorise le développement et la production de lait en poudre de différentes natures et donc à plus forte valeur ajoutée.

Le procédé selon l'invention permet, dans le cas de la production de lait en poudre, des économies d'énergie importantes de l'ordre de 40% par rapport au procédé conventionnel ainsi qu'une diminution importante du coût d'investissement. A titre de comparaison, la consommation de vapeur d'eau pour 100 kg de lait liquide traité est de l'ordre de 33 kg avec le procédé selon l'état de la technique alors qu'il est d'environ 19 kg avec le procédé selon l'invention, pour une consommation électrique sensiblement identique.

De manière générale, le procédé de l'invention est utilisable, avec des avantages analogues, pour la production de produits en poudre autres que le lait en poudre, à partir de tous types de solutions, suspensions, émulsions de différentes compositions comprenant une matière sèche en milieux aqueux.

Le procédé est par exemple applicable pour la production de produits en poudre du type :
- produits amylacés : farines de céréales (blé, avoine, maïs, orge), farines de pommes de terre, granules et flocons de pommes de terre, farine de tapioca. Ces produits peuvent être natifs, c'est-à-dire sans modifications chimiques et/ou physiques, et simplement séchés et broyés. Ces produits peuvent être modifiés physiquement, par exemple par modification de la structure cristalline des amidons, entre autres par des processus de gélatinisation et de fusion ; ils peuvent aussi être modifiés chimiquement, par exemple par hydrolyse, estérification, ou éthérification ;
- produits protéiniques : caséine du lait, gluten du blé, zéine du maïs, protéines de soja, protéines de légumineuses (pois, par exemple), protéines d'oléoprotéagineux (tournesol, colza, par exemple). Ces produits peuvent être natifs, c'est-à-dire sans modifications chimiques et/ou physiques et simplement séchés et broyés. Ces produits peuvent être modifiés physiquement, par exemple par modification des structures quaternaire, tertiaire et secondaire des protéines (processus de dénaturation) ; ils peuvent aussi être modifiés chimiquement, par exemple par hydrolyse, amidation, succinylation, ou condensation, c'est-à-dire par réaction avec les groupes organiques fonctionnels : amine, carboxyle, par exemple.

Le procédé est aussi applicable aux co-produits/sous-produits de fractionnement du lait, c'est-à-dire des fractions liquides obtenues lorsque le lait est fractionné au moyen de procédés tels que centrifugation, filtration, nanofiltration, ultrafiltration, osmose inverse... ces opérations étant destinées à séparer les différents composants du lait (matière grasse, protéines, sucres...).

Au cours de l'étape E3 de traitement thermomécanique, d'autres ingrédients, comme par exemple des céréales, des protéines, des sucres, du cacao, des vitamines, des arômes,..... peuvent être introduits simultanément au produit en poudre.

Le procédé est également applicable pour la production de produits en poudre permettant par la suite, par réhydratation, d'obtenir des aliments pour bébé : laits reconstitués selon les différents âges, bouillies diverses, mélanges en pots...

## Revendications

1. Procédé de production en continu d'un produit en poudre, à partir du produit à l'état liquide se présentant sous la forme d'un mélange du type solution, suspension ou émulsion en milieu aqueux, dans lequel au cours d'une première étape (E1) on transforme le produit de l'état liquide en produit à l'état visqueux, **caractérisé en ce que** on effectue au moins une étape (E2, E4) de foisonnement et au moins une étape (E3, E6) de séchage du produit ladite étape de séchage comprenant au moins une première étape (E3) de traitement thermomécanique au moyen d'au moins une machine de traitement thermomécanique dans laquelle on injecte simultanément le produit à l'état visqueux et une proportion déterminée de produit en poudre de la même famille que le produit à l'état liquide, la machine de traitement étant configurée pour mélanger le produit à l'état visqueux et le produit en poudre pour obtenir des particules de produit solidifiées au contact de l'air ambiant.

2. Procédé selon la revendication 1, **caractérisé en ce que**, outre la première étape (E3) de traitement thermomécanique, l'étape de séchage comprend une deuxième étape (E6) de séchage des particules obtenues à l'issue de cette étape (E3) de traitement thermomécanique.

3. Procédé selon la revendication 1 ou 2, **caractérisé en ce que**, entre l'étape (E3) de traitement thermomécanique et la deuxième étape (E6) de séchage, on effectue une étape (E5) de mise en forme du produit solide pour obtenir le produit en poudre.

4. Procédé selon l'une quelconque des revendications 1 à 3, **caractérisé en ce que** on réalise ladite étape (E2) de foisonnement du produit à l'état visqueux avant l'étape (E3) de traitement thermomécanique.

5. Procédé selon l'une quelconque des revendications 1 à 3, **caractérisé en ce que** on réalise ladite étape (E4) de foisonnement entre l'étape (E3) de traitement thermomécanique et l'étape (E5) de mise en forme du produit solide.

6. Procédé selon l'une quelconque des revendications 1 à 3, **caractérisé en ce que** on réalise une étape (E2) de foisonnement du produit à l'état visqueux avant l'étape (E3) de traitement thermomécanique et une étape (E4) de foisonnement entre ladite étape (E3) de traitement thermomécanique et l'étape (E5) de mise en forme du produit solide.

7. Procédé selon l'une quelconque des revendications précédentes, **caractérisé en ce que** on injecte un gaz au cours de ladite étape (E2, E4) de foisonnement ou au cours de l'étape (E3) de traitement thermomécanique ou au cours de l'étape (E2, E4) de foisonnement et au cours de l'étape (E3) de traitement thermomécanique.

8. Procédé selon l'une quelconque des revendications précédentes, **caractérisé en ce que** le produit en poudre injecté dans ladite machine de traitement thermomécanique est en totalité du produit recyclé après la deuxième étape (E6) de séchage.

9. Procédé selon l'une quelconque des revendications 1 à 7, **caractérisé en ce que** le produit en poudre injecté dans ladite machine de traitement thermomécanique et en partie du produit en poudre recyclé après la deuxième étape (E6) de séchage.

10. Procédé selon l'une quelconque des revendications précédentes, **caractérisé en ce que**, au cours de l'étape (E3) de traitement thermomécanique, on réalise un dégazage sous pression atmosphérique ou sous vide.

11. Procédé selon l'une quelconque des revendications précédentes, **caractérisé en ce que**, à l'issue de la transformation du produit de l'état liquide à l'état visqueux, le produit à l'état visqueux présente une concentration en matière sèche comprise entre 50 et 75%, de préférence entre 65 et 75%.

12. Procédé selon l'une quelconque des revendications précédentes, **caractérisé en ce que** à l'issue de l'étape (E3, E6) de séchage du produit à l'état visqueux, le produit sous forme solide présente une concentration en matière sèche d'environ 96 à 98%.

13. Procédé selon l'une quelconque des revendications précédentes, **caractérisé en ce que** les particules présentent à l'issue de l'étape (E3) de traitement thermomécanique une concentration en matière sèche variant entre 70 et 85% et de préférence comprise entre 80 et 85%.

14. Procédé selon l'une quelconque des revendications précédentes, **caractérisé en ce que** le rapport entre le débit massique de produit en poudre injecté dans la machine de traitement thermomécanique et le débit massique de produit à l'état visqueux introduit dans la machine de traitement thermomécanique est compris entre 0,10 et 2,50 et de préférence entre 0,20 et 1,00.

15. Procédé selon l'une quelconque des revendications précédentes, **caractérisé en ce que** on réalise l'étape (E3) de traitement thermomécanique du produit à l'état visqueux en introduisant le produit à l'état visqueux et le produit en poudre dans une machine d'extrusion à deux vis co-rotatives.

16. Procédé selon l'une quelconque des revendications précédentes, **caractérisé en ce que** on réalise l'étape (E3) de traitement thermomécanique en introduisant le produit à l'état visqueux et le produit en poudre dans un malaxeur, ou un pétrisseur, ou un mélangeur et/ou une machine d'extrusion à une vis.

17. Procédé selon l'une quelconque des revendications précédentes, **caractérisé en ce que**, au cours de l'étape (E3) de traitement thermomécanique, on introduit des ingrédients, comme par exemple des céréales, des protéines, des sucres, du cacao, des vitamines, des arômes.

18. Procédé selon l'une quelconque des revendications précédentes, **caractérisé en ce que** le produit à l'état liquide présente initialement une concentration en matière sèche prise entre 7 et 20%.

19. Procédé selon l'une quelconque des revendications précédentes, **caractérisé en ce que** le produit à l'état liquide est du lait liquide, ce par quoi on obtient du lait en poudre.

20. Procédé selon l'une quelconque des revendications 1 à 17, **caractérisé en ce que** le produit à l'état liquide est une produit amylacé, natif ou modifié (physiquement ou chimiquement) à base de farine de céréales (blé, avoine, maïs, orge, etc...), de farine de pommes de terre, de granules de pommes de terre, de flocons de pommes de terre, et/ou de farine de tapioca, le produit étant initialement sous la forme d'un mélange du type solution, suspension ou émulsion en milieu aqueux, ce par quoi on obtient à l'issue du procédé le produit sous forme pulvérulente.

21. Procédé selon l'une quelconque des revendications 1 à 17, **caractérisé en ce que** le produit à l'état liquide est un produit protéinique, natif ou modifié (physiquement et/ou chimiquement) choisi parmi la caséine du lait, le gluten du blé, la zéine du maïs, les protéines de soja, les protéines de légumineuses, en particulier de pois, et/ou les protéines d'oléoprotéagineux, en particulier de tournesol ou de colza, le produit étant initialement sous la forme d'un mélange du type solution, suspension ou émulsion en milieu aqueux ce par quoi on obtient à l'issue du procédé le produit sous forme pulvérulente.

22. Procédé selon l'une quelconque des revendications 1 à 17, **caractérisé en ce que** le produit à l'état liquide est un coproduit/sous-produit de fractionnement du lait, obtenu par fractionnement du lait par centrifugation, filtration, nanofiltration, ultrafiltration et/ou osmose inverse.

23. Procédé selon l'une quelconque des revendications précédentes, **caractérisé en ce que** le produit en poudre injecté dans la machine de traitement thermomécanique est à environ 90 - 96% de matière sèche pour les produits d'origine amylacée et protéinique et à environ 90% pour les produits d'origine lactée.

24. Procédé selon l'une quelconque des revendications précédentes, **caractérisé en ce que** le produit en poudre obtenu présente une solubilité de l'ordre de 98 à 99%, une porosité comprise entre 50 et 70% et une répartition des particules comprise entre 0,3 et 0,5.

25. Lait en poudre **caractérisé en ce qu'**il est obtenu par le procédé selon l'une quelconque des revendications 1 à 18.

26. Lait en poudre selon la revendication 25, **caractérisé en ce qu'**il présente une solubilité de 99%, une porosité comprise entre 50 et 70% et une répartition des particules comprise entre 0,3 et 0,5.

## Claims

1. Method for the continuous production of a powdered product from a product in the liquid state in the form of a solution-, suspension- or emulsion-type mixture in an aqueous medium, in which, during a first step (E1) the product in the liquid state is transformed into a product in the viscous state, **characterised in that** there are carried out at least one overrun step (E2, E4) and at least one product-drying step (E3, E6) the said drying steps comprising at least a first thermomechanical treatment step (E3) with at least one thermomechanical treatment machine into which the viscous state product and a determined amount of powdered product from the same family as the liquid state product are injected simultaneously, the treatment machine being configured to mix the viscous state product and the powdered product so as to produce solidified particles of product upon contact with the ambient air.

2. Method according to claim 1, **characterised in that**, in addition to the first thermomechanical treatment step (E3), the drying step comprises a second step (E6) for drying the particles obtained after this thermomechanical treatment step (E3).

3. Method according to either claim 1 of claim 2, **characterised in that**, between the thermomechanical treatment step (E3) and the second drying step (E6), a step of shaping the solid product is carried oui in order to obtain the powdered product.

4. Method according to any one of claims 1 to 3, **characterised in that** said step (E2) of overrun of the product in the viscous state is carried out before the thermomechanical treatment step (E3).

5. Method according to any one of claims 1 to 3, **characterised in that** said overrun step (E4) is carried out between the thermomechanical treatment step (E3) and the step (E5) of shaping the solid product.

6. Method according to any one of claims 1 to 3, **characterised in that** a step (E2) of overrun of the product in the viscous state is carried out before the thermomechanícal treatment step (E3) and an overrun step (E4) is carried out between said thermomechanical treatment step (E3) and the step (E5) of shaping the solid product.

7. Method according to any one of the preceding claims, **characterised in that** a gas is injected during said overrun step (E2, E4) or during the thermomechanical treatment step (E3) or during the overrun step (E2, E4) and during the thermomechanical treatment step.

8. Method according to any one of the preceding claims, **characterised in that** all of the powdered product injected into said thennomechanical treatment machine is product which has been recycled after the second drying step (E6).

9. Method according to any one of claims 1 to 7, **characterised in that** some of the powdered product injected into said thermomechanical treatment machine is powdered product which has been recycled after the second drying step (E6).

10. Method according to any one of the preceding claims, **characterised in that** degassing under atmospheric pressure or under vacuum is carried out during the thermomechanical treatment step (E3).

11. Method according to any one of the preceding claims, **characterised in that**, after transformation of the product from the liquid state to the viscous state, the product in the viscous state has a dry matter concentration of between 50 and 75 %, preferably between 65 and 75 %,

12. Method according to any of the preceding claims, **characterised in that** after the step (E3, E6) of drying the product in the viscous state, the product in solid form has a dry matter concentration of approximately 96 to 98%.

13. Method according to any of the preceding claims, **characterised in that**, after the thermomechanical treatment step (E3), the particles have a dry matter concentration varying between 70 and 85 % and preferably of between 80 and 85 %.

14. Method according to any one of the preceding claims, **characterised in that** the ratio between the mass flow rate of powdered product injected into the thermomechamcal treatment machine and the mass flow rate of product in the viscous state introduced into the thermomechanical treatment machine is between 0.10 and 2.50 and preferably between 0.20 and 1.00,

15. Method according to any one of the preceding claims, **characterised in that** the step (E3) of thermomechanical treatment of the product in the viscous state is carried out by introducing the product in the viscous state and the powdered product into an extruder having two co-rotating screws,

16. Method according to any one of the preceding claims, **characterised in that** the thermomechanical treatment step (E3) is carried out by introducing the product in the viscous state and the powdered product into a blender or a kneader, or a mixer and/or a single screw extruder.

17. Method according to any one of the preceding claims, **characterised in that** ingredients such as, for example, cereals, proteins, sugars, cocoa, vitamins and flavourings arc introduced during the thermomechanical treatment step (E3).

18. Method according to any one of the preceding claims, **characterised in that** the product in the liquid state initially has a dry matter concentration of between 7 and 20 %.

19. Method according to any one of the preceding claims, **characterised in that** the product in the liquid state is liquid milk, from which powdered milk is obtained.

20. Method according to any one of claims 1 to 17, **characterised in that** the product in the liquid state is a native or (physically or chemically) modified starch product based on cereal (wheat, oat, maize, barley, etc.) flour, potato flour, potato granules, potato flakes and/or tapioca flour, the product initially being in the form of a solution-, suspension- or emulsion-type mixture in an aqueous medium, from which the product is obtained in powdered form after the method.

21. Method according to any one of claims 1 to 17, **characterised in that** the product in the liquid state is a native or (physically and/or chemically) modified protein product selected from milk casein, wheat gluten, maize zein, soya proteins, legume, in particular pea, proteins and/or oil and protein seed crop (in particular sunflower or rape), proteins, the product initially being in the form of a solution∼, suspension- or emulsiontype mixture in an aqueous medium, from which the product is obtained in powdered form after the method.

22. Method according to any one of claims I to 17, **characterised in that** the product in the liquid state is a co-product/by-product of milk fractionation obtained by fractionation of the milk by centrifugation, filtration, nanofiltration, ultrafiltration and/or reverse osmosis.

23. Method according to any one of the preceding claims, **characterised in that** the powdered product injected into the thermomechanical treatment machine has a dry matter content of approximately 90 to 96 % in the case of the products of starch and protein origin and approximately 90 % in the case of products of milk origin.

24. Method according to any one of the preceding claims, **characterised in that** the powdered product obtained has solubility of approximately 98 to 99 %, porosity of between 50 and 70 % and a particle distribution of between 0.3 and 0.5.

25. Powdered milk, **characterised in that** it is obtained by the method according to any one of claims 1 to 18.

26. Powdered milk according to claim 25, **characterised in that** it has solubility of 99 %, porosity of between SO and 70 % and a particle distribution of between 0.3 and 0.5.

## Patentansprüche

1. Verfahren zum kontinuierlichen Herstellen eines Pulverproduktes aus einem Produkt in flüssigem Zustand, das in Form einer Mischung des Typs einer Lösung, Suspension oder Emulsion in einem wässrigen Medium vorliegt, wobei während eines ersten Schrittes (E1) das Produkt in flüssigem Zustand in ein Produkt in viskosem Zustand umgewandelt wird, **dadurch gekennzeichnet, dass** mindestens ein Volumenzunahme-Schritt (E2, E4) und mindestens ein Schritt (E3, E6) des Trocknens des Produktes durchgeführt werden, wobei der Schritt des Trocknens mindestens einen ersten Schritt (E3) des thermomechanischen Behandelns mittels mindestens einer Maschine, zum thermomechanischen Behandeln aufweist, in die gleichzeitig das Produkt in viskosem Zustand und ein bestimmter Anteil eines Pulverproduktes der gleichen Familie wie das Produkt im flüssigen Zustand injiziert werden, wobei die Behandlungsmaschine eingerichtet ist, um das Produkt im viskosen Zustand und das Pulverprodukt zu mischen, um Produktteilchen zu erhalten, die sich in Kontakt mit der Umgebungsluft verfestigen.

2. Verfahren gemäß Anspruch 1, **dadurch gekennzeichnet, dass** der Schritt des Trocknens neben dem ersten Schritt (E3) des thermomechanischen Behandelns einen zweiten Schritt (E6) des Trocknens der Teilchen aufweist, die am Ende des Schrittes (E3) des theremomechanishen Behandeln erhalten werden.

3. Verfahren gemäß Anspruch 1 oder 2, **dadurch gekennzeichnet, dass** zwischen dem Schritt (E3) des thermomechanischen Behandeln und dem zweiten Schritt (E6) des Trocknens ein Schritt (E5) des Formens des festen Produktes durchgeführt wird, um das Pulverprodukt zu erhalten.

4. Verfahren gemäß einem der Ansprüche 1 bis 3, **dadurch gekennzeichnet, dass** der Volumenzunahme-Schritt (E2.) des Produktes im viskosen Zustand vor dem Schritt (E3) des thermomechanischen Behandelns durchgeführt wird.

5. Verfahren gemäß einem der Ansprüche 1 bis 3, **dadurch gekennzeichnet, dass** der Volumenzunahme-Schritt (E4) zwischen dem Schritt (E3) des thermomechanischen Behandeln und dem Schritt (E5) des Formens des festen Produktes durchgeführt wird.

6. Verfahren gemäß einem der Ansprüche 1 bis 3, **dadurch gekennzeichnet, dass** ein Volumenzunahme-Schritt (E2) des Produktes im viskosen. Zustand vor dem Schritt (E3) des thermomechanischen Behandelns und ein Volumenzunahme-Schritt (E4) zwischen dem Schritt (E3) des thermomechanischen Behandelns und dem Schritt (E5) des Formens des festen Produktes durchgeführt werden.

7. Verfahren gemäß einem der vorhergehenden Ansprüche, **dadurch gekennzeichnet, dass** während des Volumenzunahme-Schrittes (E2, E4) oder während des Schrittes (E3) des thermomechanischen Behandelns oder während des Volumenzunahme-Schrittes (E2, E4) und während des Schrittes (E3) des thermomechanischen. Behandelns ein Gas injiziert wird.

8. Verfahren gemäß einem der vorhergehenden Ansprüche, **dadurch gekennzeichnet, dass** das in die Maschine zum thermomechanischen Behandeln injizierte Pulverprodukt vollständig aus dem nach dem zweiten Schritt (E6) des Trocknens zurückgeführten Produkt ist.

9. Verfahren gemäß einem der Ansprüche 1 bis 7, **dadurch gekennzeichnet, dass** das in die Maschine zum thermomechanischen Behandeln injiziert Pulverprodukt teilweise aus dem nach dem zweiten Schritt (E6) des Trocknen zurückgeführten Pulverprodukt ist.

10. Verfahren gemäß einem der vorhergehenden Ansprüche, **dadurch gekennzeichnet, dass** während des Schrittes (E3) des thermomechanischen Behandelns ein Entgasen unter atmosphärischem Druck oder mit Vakuum durchgeführt wird.

11. Verfahren gemäß einem der vorhergehenden Ansprüche, **dadurch gekennzeichnet, dass** am Ende des Umwandelns des Produktes aus dem flüssigen Zustand in den viskosen Zustand das Produkt im viskosen Zustand eine Trockensubstanz-Konzentration zwischen 50% und 75%, vorzugsweise zwischen 65% und 75% aufweist.

12. Verfahren gemäß einem der vorhergehender. Ansprüche, **dadurch gekennzeichnet, dass** am Ende des Schrittes (E3, E6) des Trocknens des Produktes im viskosen Zustand das Produkt in fester Form eine Trockensubstanz-Konzentration von ungefähr 96% bis 98% aufweist.

13. Verfahren gemäß einem der vorhergehenden Ansprüche, **dadurch gekennzeichnet, dass** die Teilchen am Ende des Schrittes (E3) des thermomechanischen Behandeln eine Trockensubstanz-Konzentration aufweisen, die wischen 70% und 85% variiert und vorzugsweise zwischen 80% und 85% beträgt.

14. Verfahren gemäß einem der vorhergehenden Ansprüche, **dadurch gekennzeichnet, dass** das Verhältnis zwischen dem Mer.gendurchtluss des in die Maschine zum thermomechanischen Behandeln injizierten Pulverproduktes und dem Menaendurchfluss des in die Maschine zum thermomechanischen Behandeln eingeführten Produktes im viskosen Zustand zwischen 0,10 und 2,50 und vorzugsweise zwischen 0,20 und 1,00 beträgt.

15. Verfahren gemäß einem der vorhergehenden Ansprüche, **dadurch gekennzeichnet, dass** der Schritt (E3) des thermomechanischen Behandelns des Produktes im viskosen Zustand durch Einführen des Produktes im viskosen Zustand und des Pulverproduktes in einen Extruder mit zwei gleichlaufenden Schnecken erfolgt.

16. Verfahren gemäß einem der vorhergehenden Ansprüche, **dadurch gekennzeichnet, dass** der Schritt (E3) des thermomechanischen Behandeln durch Einführen des Produktes im viskosen Zustand und des Pulverproduktes in eine Rührmaschine oder eine Knetmaschine oder einen mischer und/oder einen Einschneckenextruder erfolgt.

17. Verfahren gemäß einem der vorhergehenden Ansprüche, **dadurch gekennzeichnet, dass** während des Schrittes des thermomecha;izcl;eix Behandelns Zutaten, wie zum Beispiel Getreide, Protein, Zuckerarten, Kakao, Vitamine, Aromen hinzugefügt werden.

18. Verfahren gemäß einem der vorhergehenden Ansprüche, **dadurch gekennzeichnet, dass** das Produkt im flüssigen Zustand anfangs eine Trockensubstanz-Konzentration zwischen 7% und 20% aufweist.

19. Verfahren gemäß einem der vorhergehenden Ansprüche, **dadurch gekennzeichnet, dass** das Produkt im flüssigen Zustand flüssig Milch ist, aus der Milchpulver gewonnen wird,

20. Verfahren gemäß einer der Ansprüche 1 bis 17, **dadurch gekennzeichnet, dass** das Produkt im flüssigen zustand ein natives oder (physikalisch oder chemisch) modifiziertes Stärkeerzeugnis auf Basis von Getreidemehl (Weizen, Hafer, Mais, Gerste, usw.), Kartoffelmehl, Kartoffelgrarialat, Kartoffelflocken und/oder Tapiokamehl ist, wobei das Produkt anfanges in Form einer Mischung des Typs einer Lösung, Suspension oder Emulsion in einem wässrigen Medium vorliegt, aus dem am Ende des Verfahrens das Produkt in Pulverform erhalten wird.

21. Verfahren gemäß einem der Ansprüche 1 bis 17, **dadurch gekennzeichnet, dass** das Produkt im flüssigen Zustand ein natives oder (physikalisch und/oder chemisch) modifiziertes Eiweißprodukt ist, das ausgewählt ist aus Milch-Kasein, Weizengluten, Mais-Zein, Solaproteinen, Proteinen von Hülsenfrüchte, insbesondere von Erbsen, und/oder Proteinen von Ölsaaten und Eiweißpflanzen, insbesondere von Sonnenblumen oder Raps, wobei das Produkt anfangs in Form einer Mischung des Typs einer Lösung, Suspension oder Emulsion in einem wässrigen Medium vorliegt, aus dem am Ende des Verfahrens das Produkt in Pulverform erhalten wird.

22. Verfahren gemäß einem der Ansprüche 1 bis 17, **dadurch gekennzeichnet, dass** das Produkt im flüssigen Zustand ein Co-Produkt/Nebenprodukt des Fraktionieren von Milch ist, das durch Fraktionierten von Milch mittels Zentrifugation, Filtration, Nanofiltration, Ultrafiltration und/oder Umkehrosmose erhalten wird.

23. Verfahren gemäß einem der vorhergehenden Ansprüche, **dadurch gekenntzeichnet, dass** das in die Maschine zum thermomechanischen Behandeln injizierte Pulverprodukt ungefähr 90% bis 96% Trockensubstanz für Produkte stärkehaltigen und eiweißhaltigen Ursprungs und ungefähr 90% Trockensubstanz für aus Milch stammende Produkte aufweist.

24. Verfahren gemäß einem der vorhergehenden Ansprüche, **dadurch gekenntzeichnet, dass** das erhaltene Pulverprodukt eine Löslichkeit im Bereich von 98% bis 99%, eine Porosität zwischen 50% und 70% und eine Teilchenverteilung zwischen 0,3 und 0,5 aufweist.

25. Milchpulver, **dadurch gekenntzeichnet, dass** es mittels des Verfahrens gemäß einem der Ansprüche 1 bis 1.8 erhalten wird.

26. Milchpulver gemäß Anspruch 25, **dadurch gekennzeichnet, dass** es eine Löslichkeit von 99%, eine Porosität zwischen 50% und 70% und eine Teilchenverteilung zwischen 0,3 und 0,5 aufweiset.
